**Europäisches Patentamt**

**European Patent Office**

**Office européen des brevets**

(19)

(11) Veröffentlichungsnummer : **0 143 981**
**B1**

(12) **EUROPÄISCHE PATENTSCHRIFT**

(45) Veröffentlichungstag der Patentschrift :
21.12.88

(51) Int. Cl.⁴ : **H 02 B   1/04**

(21) Anmeldenummer : **84112940.6**

(22) Anmeldetag : **26.10.84**

(54) **Selbstschalter zum Aufsetzen auf Schienen.**

(30) Priorität : **29.10.83 DE 3339401**

(43) Veröffentlichungstag der Anmeldung :
**12.06.85 Patentblatt 85/24**

(45) Bekanntmachung des Hinweises auf die Patenterteilung : **21.12.88 Patentblatt 88/51**

(84) Benannte Vertragsstaaten :
**FR GB IT**

(56) Entgegenhaltungen :
**DE–A– 1 904 731**
**GB–A– 2 063 566**
**US–A– 2 842 635**
**US–A– 3 401 363**
**US–A– 3 431 469**

(73) Patentinhaber : **Sursum Elektrizitätsgesellschaft Ley-hausen GmbH & Co.**
**Bucher Strasse 79**
**D-8500 Nürnberg 90 (DE)**

(72) Erfinder : **Westermeyer, Joseph, Dipl.-Ing.**
**Bucher Strasse 79**
**D-8500 Nürnberg 90 (DE)**

(74) Vertreter : **Böhme, Volker, Dipl.-Ing. et al**
**Patentanwälte Dipl.-Ing. E. Kessel Dipl.Ing. V. Böhme**
**Karolinenstrasse 27**
**D-8500 Nürnberg 1 (DE)**

EP 0 143 981 B1

## Beschreibung

Die Erfindung betrifft einen Selbstschalter gemäß dem Oberbegriff des Patentanpruches 1.

Ein bekannter (GB-A-2 063 566) Selbstschalter dieser Art wird in der Praxis so verwendet, daß der Griffhebel bei Schließstellung des Kontaktes nach oben zeigt. Bei diesem bekannten Selbstschalter ist die Einrichtung zur lösbaren Befestigung gebildet von zwei einander zugewendeten, jedoch mit Abstand voneinander angeordneten Haken, von denen einer federnd gelagert ist. Mit dem einen Haken wird eine Schienenkante hinterfaßt, wonach der andere Haken unter zurückfederung über eine weitere Schienenkante geschoben wird, um diese ebenfalls zu hinterfassen. Beide elektrische Anschlüsse sind mit an den beiden Querseiten angeordneten Schraubklemmen verbunden, die nach dem Anbringen des Selbstschalters an den Schienen beide zu betätigen sind. Die drei Montagevorgänge werden als aufwendig empfunden.

Es ist auch ein Selbstschalter bekannt (US-A-3 401 363), bei dem die Einrichtung zur lösbaren Befestigung an den Schienen gebildet ist von einem bei der oberen Querseite angeordneten zweischenkeligen Steckkontakt und einem davon Abstand aufweisenden, bei der unteren Querseite angeordneten weiteren aufschnappbaren zweischenkeligen Halterungsorgan, wobei das untere Halterungsorgan in Höhe der Schraubklemme angeordnet ist und bei Schließstellung des Schaltkontaktes das Griffstück des Griffhebels in Richtung zur oberen Querseite nach oben gelegt ist. Diese Maßnahmen lassen sich jedoch nicht ohne weiteres auf den Selbstschalter gemäß Oberbegriff des Patentanspruches 1 übertragen.

Aufgabe der Erfindung ist es daher, den Selbstschalter gemäß Oberbegriff des Patentanspruches 1 dahingehend abzuändern, daß einer der drei erwähnten Montagevorgänge entfällt und der Griffhebel bei Schließstellung nach oben weist.

Der erfindungsgemäße Selbstschalter ist, diese Aufgabe lösend, dadurch gekennzeichnet, daß die Einrichtung zur lösbaren Befestigung an den Schienen gebildet ist von einem bei der oberen Querseite angeordneten zweischenkeligen steckkontakt und einem davon Abstand aufweisenden, bei der unteren Querseite angeordneten weiteren aufschnappbaren zweischenkeligen Halterungsorgan, wobei das aufschnappbare Halterungsorgan in Höhe der Schraubklemme angeordnet ist und bei Schließstellung der Schaltkontakte das Griffstück des Griffhebels in Richtung zur oberen Querseite nach oben gelegt ist, und daß der Steckkontakt einen elektrischen Anschluß zum Bimetall-Auslöser bildet, sowie der Trägerstreifen des Bimetall-Auslösers anderenends in eine Aussparung bei einem Fortsatz der Oberseite-Seitenwandung greift und über eine Litze mit dem Steckkontakt verbunden ist, und die Angriffsstelle des Zwischengelenkstückes am Griffhebel an der der Vorderseite gegenüberliegenden Seite der Achse liegt und das sperrende Ende der Sperrklinke näher bei der Vorderseite angeordnet ist als das Anlenkende der Sperrklinke.

Bei dem erfindungsgemäßen Selbstschalter erfolgt der eine Stromanschluß bereits beim Anbringen des Selbstschalters an den Schienen, von denen eine stromführend ist, so daß nur noch zwei Montagevorgänge, nämlich das Anbringen und die Betätigung der verbliebenen Schraubenklemme nötig sind. Es wird die an sich bekannte (US-A-3 401 363) Einrichtung zur lösbaren Befestigung, die aus Steckkontakt und einem weiteren aufschnappbaren Halterungsorgan besteht, bei einem Selbstschalter gemäß Oberbegriff des Patentanspruches 1 angewendet, so daß nun auch diese Schaltergattung mit Steckkontakt versehen ist bzw. auf eine Stromschiene aufschnappbar ist. Dies ist nicht ohne weiteres naheliegend, weil es mit Änderungen der Bauweise des bekannten Selbstschalters der im Oberbegriff des Patentanspruches 1 angegebenen Art verbunden ist.

Es sind nämlich die den Bimetall-Auslöser betreffenden Merkmale des erfindungsgemäßen Selbstschalters nötig, um einen geeigneten Anschluß an den Steckkontakt zu schaffen. Die die Schaltmechanik betreffenden Merkmale stellen sicher, daß trotz der Anwendung von Steckkontakt und Halterungsorgan zum Anbringen an den Schienen der Griffhebel bei Schließstellung nach oben weist.

Besonders zweckmäßig und vorteilhaft ist es, wenn der Steckkontakt mit einer Gehäuseflachseite (Deckel oder Boden) mittels Zapfen ineinandergreift. Der Trägerstreifen wird genützt und der Steckkontakt beansprucht bei sicherer Verankerung wenig Gehäuseinnenraum.

Besonders zweckmäßig und vorteilhaft ist es auch, wenn ein Auge mit Bohrung zum Durchstecken eines Bolzens zwischen der oberen Querseite und dem Bimetall-Auslösers angeordnet ist und diese Querseite von der Rückseite her gerade durchläuft. Diese Anordnung nutzt den Raum zwischen Bimetall-Auslöser und Querseite und entfernt dieses Auge mit Bohrung von der Vorderseite des Gehäuses.

Besonders zweckmäßig und vorteilhaft ist es dabei, wenn in der unteren Querseite ein einziger Durchbruch für Gas vorgesehen und zwischen dem aufschnappbaren Halterungsorgan und dem Auge mit Bohrung angeordnet ist.

Besonders zweckmäßig und vorteilhaft ist es sodann, wenn die Sperrklinke sich bei Freigabe des Sperrhebels von der Vorderseite des Gehäuses weg zwischen zwei Wangen des Schaltarmes legt. Es ist in platzsparender Weise Bewegungsraum für die Sperrklinke geschaffen.

Für den hier beschriebenen Selbstschalter sind die Gestaltungen wesentlich, die mit der Anbringung des Steckkontaktes und mit der Anbringung des weiteren aufschnappbaren Halterungsorganes verbunden sind. Hierher gehört auch die Anordnung von Augen mit Bohrungen für Bolzen zum Zusammenhalten der beiden Gehäuscha-

len bzw. von Gehäusekörper und Deckel. Wichtig ist weiterhin zusätzlich die Gestaltung, die durch die Stellung des Griffhebels bei geschlossenem Schaltkontakt bedingt ist. Im übrigen ist die Gestaltung bzw. Bauweise des Selbstschalters gemäß GB-A-2 063 566 so wenig als möglich geändert.

In der Zeichnung ist eine bevorzugte Ausführungsform der Erfindung dargestellt und zeigt

Fig. 1 eine Draufsicht auf einen geöffneten Selbstschalter zum Aufsetzen auf Schienen und

Fig. 2 eine Draufsicht auf eine Einzelheit der Darstellung in Fig. 1 in einem gegenüber Fig. 1 vergrößerten Maßstab.

Der Selbstschalter gemäß Zeichnung ist von flacher Bauweise und umfaßt als Gehäuse einen Kasten 1 mit umlaufenden Seitenwandungen und einen nicht gezeigten aufgelegten Deckel. Der im wesentlichen rechteckige Selbstschalter weist an drei der vier Seiten an der Seitenwandung je ein Auge 2 bzw. eine Verdickung der Seitenwandung auf, das bzw. die mit einer Bohrung versehen ist. Durch die Bohrungen und entsprechende Bohrungen des Deckels werden Bolzen, z. B. Nieten gesteckt, um Kasten 1 und Deckel zusammenzuhalten. Das eine Auge 2 ist an der Rückseite 3, das zweite Auge ist an der oberen Querseite 4 und das dritte Auge ist an der unteren Querseite 5 vorgesehen, wogegen die Vorderseite 6 frei von einem Auge mit Bohrung ist.

Angrenzend an die Seitenwandung der oberen Querseite ist in den Kasten 1 ein klemmenartiger, U-förmiger Steckkontakt 7 mit Spiel beweglich eingelegt, der zwei parallele Schenkel aufweist, von denen nur einer in der Zeichnung zu sehen ist. Das Spiel bzw. die leichte Beweglichkeit des Steckkontaktes dient der Anpassung an das Widerlager, auf das er aufgesetzt wird. Die beiden Schenkel bilden mit einem aus dem Gehäuse herausragenden Stück einen Klemmbereich, in dem ein Stromleiter bzw. eine Stromschiene zwischen die beiden Schenkel schiebbar ist. Der Steckkontakt 7 verringert seine Breite kurz nach Eintritt in das Gehäuse und verläuft im wesentlichen nur geradlinig. Ein nicht gezeigter Zapfen des Steckkontaktes 7 ragt in den Boden des Kastens 1 und ein Zapfen 8 des Steckkontaktes ragt in den nichtgezeigten Deckel, um den Steckkontakt gegen Verschiebungen beim Aufsetzen und Abziehen vom Stromleiter zu sichern. Die Schenkel des Steckkontaktes 7 liegen zwischen Kastenboden und Deckel übereinander, so daß der zu erfassende Stromleiter in Richtung der Längserstreckung der Rückseite 3 verläuft.

Der Steckkontakt 7 ist zwischen einen Bereich der Seitenwandung an der oberen Querseite 4 und eine Verdickung 9 der Seitenwandung an der Rückseite 3 eingelegt, wobei diese Verdickung 9 auch das eine Auge 2 umfaßt. Die Verdickung 9 weist zur Innenseite hin eine Aussparung auf, in die ein Endstück eines metallischen Trägerstreifens 10 ragt, der zum anderen Ende hin zweimal um 90° abgewinkelt ist. Die Endstück-Abwinkelung greift in eine Aussparung bei einem Fortsatz 11 der Seitenwandung an der oberen Querseite.

Der Trägerstreifen ist in den beiden Aussparungen verklebt, so daß insgesamt ein sicherer, völlig bewegungsfreier Sitz des Trägerstreifens vorliegt. Dieser Fortsatz 11 und damit das Ende des Trägerstreifens 10 liegt in Verlängerung des Steckkontaktes 7 und mit Abstand von diesem. Der Steckkontakt ist über eine metallische Litze 12 an den Trägerstreifen 10 angeschlossen, wodurch im Hinblick auf die Beweglichkeit des Steckkontaktes eine starre, bruchgefährdete elektrische Verbindung vermieden ist.

An dem Trägerstreifen 10 ist ein üblicher gerader Bimetall-Auslöser 13 befestigt, der sich an dem oberen Querseiten-Auge 2 vorbei erstreckt. An der oberen Querseite 4 ist in der Seitenwandung zwischen diesem Auge 2 und der Vorderseite ein Durchbruch vorgesehen, durch den eine Madenschraube 14 betätigbar ist, die im vorderen Ende des Bimetall-Auslösers steckt und eine weiter unten erläuterte Schaltmechanik betätigt, wenn der Auslöser sich durchbiegt.

Der Bimetall-Auslöser 13 ist über eine metallische Litze mit einem Schaltarm 15 der erwähnten Schaltmechanik verbunden, der ein Kontaktstück 16 trägt oder bildet, das mit einem ortsfesten Kontaktstück 17 zusammenwirkt. Der von den beiden Kontaktstücken 16, 17 gebildete Schaltkontakt befindet sich in einem Lichtbogenkammer 18 genannten Teil des Gehäuses. Das feststehende Kontaktstück 17 ist an eine Spule 19 eines Schlaganker-Auslösers 20 angeschlossen. Diese ist anderenends an eine metallische Litze 27 angeschlossen, die über eine Öffnung in der Seitenwandung zu einer Schraubklemme 22 führt. Der Schlaganker-Auslöser 20 weist eine vorspannende Feder, einen Stößel und ein Rückleitblech auf und ist auch sonst von an sich bekannter Bauart.

Der Schraubklemme 22 folgt in Richtung zur Rückseite 3 das Auge 2 der unteren Querseite 5, wobei dieses Auge sich in Verlängerung der vorderen Hälfte der Lichtbogenkammer 18 befindet. An das Auge 2 schließt sich ein Durchbruch 23 für Gase in der Seitenwandung an, der nach hinten hin von einem gebogenem Wandungsstück 24 begrenzt ist. Hinter dem gebogenen Wandungsstück 24 befindet sich ein aufschnappbares Halterungsorgan 25 in Form einer U-förmigen zweischenkeligen Klemme, die einen Ansatz 26 des Gehäuses umfaßt und zwischen dem Boden des Kastens 1 und dem nichtgezeigten Deckel gehalten ist. Der Durchgang zwischen den Schenkeln des Halterungsorganes erfolgt rechtwinkelig zur Längserstreckung der Rückseite 3. An der unteren Seite des Gehäuses überragen der Kastenboden und der Deckel die Seitenwandung der unteren Querseite 5 nach unten hin. In der Lichtbogenkammer 18 sind zueinander parallel angeordnete Deionbleche 27 vorgesehen, zu denen Ableitbleche parallel verlaufen, die vom Trägerstreifen 10 und vom ortsfesten Kontaktstück 17 her kommen.

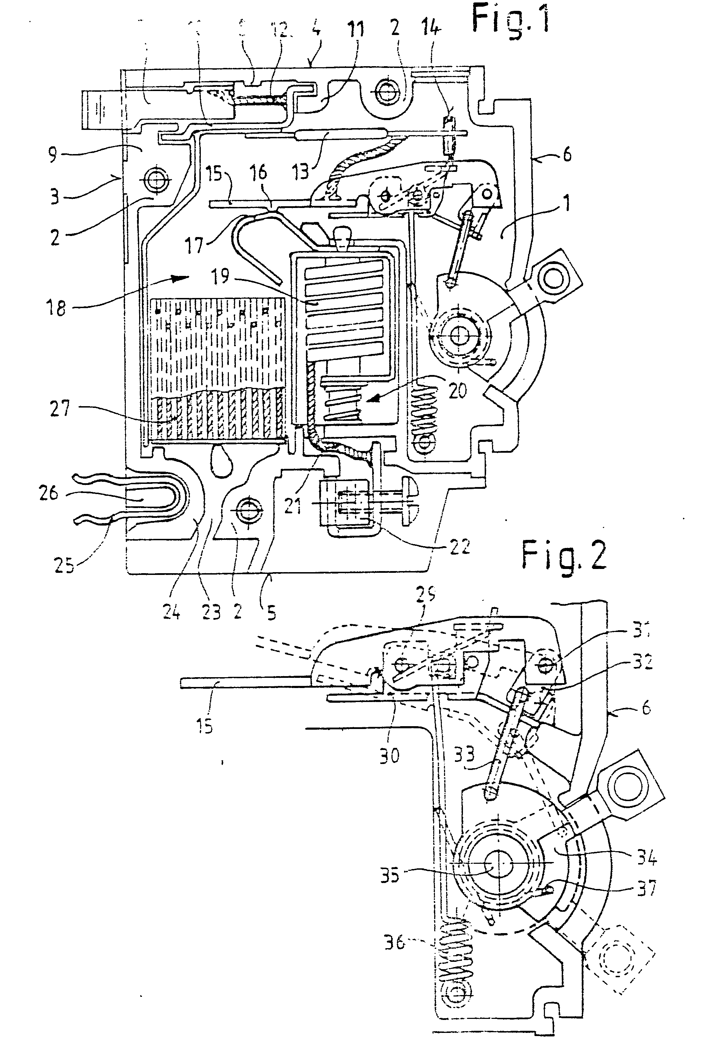

Bei der Schaltmechanik ist gemäß Fig. 2 der Schaltarm 15 um eine Achse 29 drehbar. Der Schaltarm 15 trägt um die Achse 29 drehbar einen dreiarmigen Sperrhebel 30, dessen einer Arm der Madenschraube 14 des Bimetall-Auslösers 13 zugewendet ist, dessen zweiter Arm dem Stößel des Schlaganker-Auslösers 20 zugeordnet ist und dessen dritter Arm in Richtung des freien Endes des Schaltarmes 15 ragt und ein Klinkwiderlager bildet. Diese Bauweise ist z. B. in der DE-B 19 04 731 wiedergegeben. Am freien Ende des Schaltarmes 15 ist um eine Achse 31 drehbar eine Sperrklinke 32 vorgesehen, die mit einem Klinkarm mit dem Klinkwiderlager des Sperrhebels zusammenwirkt. Am anderen Arm der Sperrklinke 32 ist ein Zwischengelenkstück 33 angelenkt, das anderenends an einen Arm eines Griffhebels 34 angelenkt ist, der um eine Achse 35 drehbar gelagert ist und mit dem anderen Arm durch einen Durchbruch in der Seitenwandung des Gehäuses an der Vorderseite 6 nach außen ragt. Eine Spiralfeder 36 versucht, den Schaltarm 15 in Offenstellung zu ziehen, und eine Drahtfeder 37 drängt den Griffhebel 34 in die gestrichelt dargestellte Aus-Stellung.

Bei der in Fig. 2 gezeigten Stellung ist das Griffstück des Griffhebels 34 nach oben geschwenkt und ist der Schaltkontakt geschlossen. Der Winkel zwischen der durch die Achse 35 gehenden Mittellinie des Griffarmes des Griffhebels 34 und der Verbindungslinie von Achse 35 und Anlenkstelle des Zwischengelenkstückes 33 beträgt ca. 60°. Die Anlenkstelle des Zwischengelenkstückes 33 an der Sperrklinke 32 besitzt von der Vorderseite 6 größeren Abstand als das Ende des Klinkarmes der Sperrklinke, wodurch die Kraftverhältnisse so eingestellt sind, daß die Sperrklinke 32 sich beim Ausschalten von der Vorderseite 6 wegbewegt. Das freie Endstück dieses Klinkarmes ist gegen die Stirnkante des freien Endes des Klinkarmes des Sperrhebels 30 gedrückt, so daß diese Stirnkante das Klinkwiderlager des Sperrhebels bildet. Wenn der Griffarm des Griffhebels 34 nach unten gelegt wird, dann wandert deren Anlenkstelle an das Zwischengelenkstück 33 bis in den Durchbruch in der Seitenwandung der Vorderseite, etwa an die Stelle, welche der nach oben geschwenkte Griffarm einnimmt. Wenn die Sperrklinke 32 sich im Uhrzeigersinn von der Vorderseite 6 wegbewegend den Sperrhebel 30 freigibt, dann bewegt sie sich zwischen zwei Wangen bzw. Abwinkelungen des Schaltarmes 30, wodurch in platzsparender Weise Bewegungsraum für die Sperrklinke geschaffen ist. Bei der gezeigten Stellung hält eine auf das Zwischengelenkstück 33 wirkende Kraft den Griffhebel 34 in einer Totpunktlage.

**Patentansprüche**

1. Selbstschalter zum Aufsetzen auf Schienen, der an der Vorderseite (6) eines Gehäuses (1) einen Griffhebel (34) und an der Rückseite (3) eine Einrichtung zur lösbaren Befestigung an den Schienen aufweist, bei dem der hintere Gehäuseteil eine Lichtbogenkammer (18) bildet, die nahe der unteren Querseite (5) Deionbleche (27) und oberhalb diesen Schaltkontakte (16, 17) aufnimmt, und der vordere Gehäuseteil nahe der unteren Querseite (5) einen Schlaganker-Auslöser (20) und darüber eine Schaltmechanik und einen Bimetall-Auslöser (13) aufnimmt, der an einem metallischen Trägerstreifen (10) befestigt ist, der einerends in eine Aussparung einer Verdickung (9) der Rückseite (3)-Seitenwandung ragt, wobei eine an der unteren Querseite (5) vorgesehene Schraubklemme (22) einen elektrischen Anschluß (21) zum Schlaganker-Auslöser (20) bildet, bei dem die Schaltkontakte von einem, mit dem Schlaganker-Auslöser (20) elektrisch verbundenen ortsfesten Kontaktstück (17) und einem der Schaltmechanik zugehörenden beweglichen Kontaktstück (16) gebildet sind, das mit dem Bimetall-Auslöser (13) elektrisch verbunden ist, und bei dem die Schaltmechanik einen drehbar (29) gelagerten Schaltarm (15) aufweist, der das bewegliche Kontaktstück (16) und auch eine Sperrklinke (32) drehbar trägt, die bei Schließstellung der Schaltkontakte mit einem Ende einen Sperrhebel (30) festlegt und mit dem anderen Ende an ein Zwischengelenkstück (33) gelenkt ist, das anderenends an das innere Ende des Griffhebels (34) angelenkt ist, dadurch gekennzeichnet, daß die Einrichtung zur lösbaren Befestigung an den Schienen gebildet ist von einem bei der oberen Querseite (4) angeordneten zweischenkeligen Steckkontakt (7) und einem davon Abstand aufweisenden, bei der unteren Querseite (5) angeordneten weiteren aufschnappbaren zweischenkeligen Halterungsorgan (25), wobei das aufschnappbare Halterungsorgan (25) in Höhe der Schraubklemme (22) angeordnet ist und bei Schließstellung der Schaltkontakte (16, 17) das Griffstück des Griffhebels (34) in Richtung zur oberen Querseite (4) nach oben gelegt ist, und daß der Steckkontakt (7) einen elektrischen Anschluß (12) zum Bimetall-Auslöser (13) bildet, sowie der Trägerstreifen (10) des Bimetall-Auslösers (13) anderenends in eine Aussparung bei einem Fortsatz (11) der Oberseite (4)-Seitenwandung greift und über eine Litze (12) mit dem Steckkontakt (7) verbunden ist, und die Angriffsstelle des Zwischengelenkstückes (33) am Griffhebel (34) an der der Vorderseite (6) gegenüberliegenden Seite der Achse (35) liegt und das sperrende Ende der Sperrklinke (32) näher bei der Vorderseite angeordnet ist als das Anlenkende der Sperrklinke.

2. Selbstschalter nach Anspruch 1, dadurch gekennzeichnet, daß der Steckkontakt (7) mit einer Gehäuseflachseite (Deckel oder Boden) mittels Zapfen ineinandergreift.

3. Selbstschalter nach Anspruch 1 oder 2, dadurch gekennzeichnet, daß ein Auge (2) mit Bohrung zum Durchstecken eines Bolzens zwischen der oberen Querseite (4) und dem Bimetall-Auslöser angeordnet ist und diese Querseite von der Rückseite (3) her gerade durchläuft.

4. Selbstschalter nach Anspruch 1, 2 oder 3, dadurch gekennzeichnet, daß in der unteren Querseite (5) ein einziger Durchbruch (23) für Gas vorgesehen und zwischen dem aufschnappbaren Halterungsorgan (25) und dem Auge (2) mit Bohrung angeordnet ist.

5. Selbstschalter nach Anspruch 1, dadurch gekennzeichnet, daß die Sperrklinke (32) sich bei Freigabe des Sperrhebels (30) von der Vorderseite (6) des Gehäuses weg zwischen zwei Wangen des Schaltarmes (15) legt.

## Claims

1. Automatic switch for mounting on busbars, which has a lever grip (34) on the front side (6) of a housing (1) and a device, on the rear side (3), for detachably fixing the said switch to the busbars, the rear housing part forming an arc chamber (18) which accommodates deionizing plates (27) in the vicinity of the bottom horizontal side (5) and switching contacts (16, 17) above the said plates, and the front housing part accommodating a moving-core tripping device (20) in the vicinity of the bottom horizontal side (5) and above it a switching mechanism and a bimetallic release (13) which is fixed to a metallic carrier strip (10) which at one end projects into a recess in a thicker portion (9) of the rear side-wall (3), a screw terminal (22) provided on the bottom horizontal side (5) forming an electrical connection (21) with the moving-core tripping device (20), wherein the switching contacts are formed by a stationary contact part (17) electrically connected to the moving-core tripping device (20) and movable contact part (16) which belongs to the switching mechanism and is electrically connected to the bimetallic release (13), and wherein the switching mechanism has a rotatably (29) mounted switching arm (15) which rotatably supports the movable contact part (16) as well as a locking pawl (32), one end of which, when the switching contacts are closed, secures a locking lever (30) and the other end of which is hinged with a middle hinged part (33) which at the other end is hinged with the inside end of the lever grip (34), characterized in that the device for detachably fixing the said switch to the busbars is formed by a two-arm plug contact arranged on the top horizontal side (4) and another two-arm fixing member (25) which can be snapped on and which is arranged on the bottom horizontal side (5) at a distance therefrom, the fixing member (25), which can be snapped on, being arranged at the same height as the screw terminal (22) and the grip part of the lever grip (34) being displaced upwards in the direction of the top horizontal side (4) when the switching contacts (16 17) are closed, and in that the plug contact (7) forms an electrical connection (12) with the bimetallic release (13), and the carrier strip (10) of the bimetallic release (13) at the other end engages into a recess in a continuation (11) of the upper side-wall (4) and is joined via a lead (12) to the plug contact (7), and the point where the middle hinged part (33) engages with the lever grip (34) is located on the opposite side of the axis (35) to the front side (6) and the locking end of the locking pawl (32) is arranged closer to the front side than the hinging end of the locking pawl.

2. Automatic switch according to Claim 1, characterized in that the plug contact (7) interlocks with a flat side of the housing (cover or base) by means of pins.

3. Automatic switch according to Claim 1 or 2, characterized in that a lug (2) with a bore for inserting a bolt is arranged between the top horizontal side (4) and the bimetallic release and runs straight through this horizontal side from the rear side (3).

4. Automatic switch according to Claim 1, 2 or 3, characterized in that a single opening (23) for gas is provided in the bottom horizontal side (5) and is arranged between the fixing member (25) which can be snapped on and the lug (2) with a bore.

5. Automatic switch according to Claim 1, characterized in that the locking pawl (32), when the locking lever (30) is released, positions itself away from the front side (6) of the housing between two flanges of the switching arm (15).

## Revendications

1. Interrupteur automatique pour mise en place sur des rails qui présente sur la face avant (6) d'un boîtier (1) un levier de prise (34) et sur la face arrière (3) un dispositif de fixation amovible sur les rails, sur lequel la partie arrière du boîtier constitue une chambre à arc (18), qui supporte près de la face transversale inférieure (5) des tôles de désionisation (27) et au-dessus de celles-ci des contacts de commutation (16, 17) et dont la partie antérieure du boîtier supporte près de la face transversale inférieure (5) un déclencheur à armature de choc (20) et, au-dessus de celui-ci, une mécanique de commande et un déclencheur à bilame (13), qui est fixé sur une lame-support (10) métallique dont une extrémité pénètre dans un évidement d'un épaississement (9) de la face arrière (3) de la paroi d'entourage latérale, sur lequel une borne à vis (22) prévue sur la face transversale (5) inférieure constitue une connexion électrique (21) avec le déclencheur à armature de choc (20), sur lequel les contacts de commutation sont constitués par une pièce de contact fixe (17) reliée électriquement au déclencheur à armature de choc (20) et par une pièce de contact (16) mobile appartenant à la mécanique de commande, qui est reliée électriquement au déclencheur à bilame (13), et sur lequel la mécanique de commande présente un bras de couplage (15) monté libre en rotation (29), qui porte la pièce de contact (16) mobile, ainsi qu'un cliquet (32) libre en rotation, qui, en position de fermeture des contacts de commutation, maintient par une extrémité un levier d'arrêt (30) et est articulé par son autre extrémité à une pièce articulée intercalaire (33), laquelle est articulée par son autre extrémité sur l'extrémité intérieure du levier de prise (34), caractérisé en ce que le dispositif de fixation amovible sur les rails est constitué par un contact à fiches (7) à deux branches disposé sur la face transversale supérieure (4) et, à quelque distance de celui-ci, par un autre organe de fixation (25) à deux branches encliquetable, qui est disposé sur la face transversale inférieure (5), l'organe de fixation (25) encliquetable étant disposé à hauteur de la borne à vis (22) et l'élément de prise du levier de prise (34) étant placé vers le haut en direction de la face transversale (4) supérieure, en position de fermeture des contacts de commutation (16, 17), en ce que le contact à fiches (7) constitue une connexion électrique (12) avec le déclencheur à bilame (13) tandis que la lame-support (10) du déclencheur à bilame (13) est engagée par son autre extrémité dans un évidement d'un appendice (11) de la paroi latérale de la face supérieure (4) et est reliée par l'intermédiaire d'un toron (12) au contact à fiches (7) et en ce que l'endroit d'attaque de la pièce articulée intermédiaire (33) sur le levier de prise (34) se trouve sur le côté de l'axe (35) en regard de la face avant (6), l'extrémité d'arrêt du cliquet (32) étant disposée plus près de la face avant que l'extrémité articulée du cliquet.

2. Interrupteur automatique selon la revendication 1, caractérisé en ce que le contact à fiches (7) est en prise au moyen d'un tenon avec une face plate du boîtier (couvercle ou base).

3. Interrupteur automatique selon la revendication 1 ou 2, caractérisé en ce qu'il est disposé un œillet (2) avec un perçage pour l'enfoncement d'un boulon entre la face transversale (4) supérieure et le déclencheur à bilame, qui traverse cette face transversale par l'arrière (3).

4. Interrupteur automatique selon la revendication 1, 2 ou 3, caractérisé en ce qu'il est prévu dans la face transversale (5) inférieure une unique percée (23) pour du gaz, laquelle est disposée entre l'organe de fixation (25) encliquetable et l'œillet (2) avec perçage.

5. Interrupteur automatique selon la revendication 1, caractérisé en ce que, lors de la libération du levier d'arrêt (30), le cliquet (32) s'écarte de la face avant (6) du boîtier entre deux faces du bras de couplage (15).

Fig.1

Fig.2